# EUROPEAN PATENT APPLICATION

(11) **EP 0 726 690 A2**
(43) Date of publication of application: **14.08.1996**
(21) Application number: 96850017.3
(22) Date of filing: 01.02.1996
(51) Int. Cl.: H04Q 7/38, H04Q 7/30, H04B 7/26

(54) **Procedure to increase the traffic capacity in a wireless communications system**

(30) Priority: 08.02.1995 SE 9500449
(71) Applicant: TELIA AB, S-123 86 Farsta (SE)
(72) Inventor: Alexius, Staffan, S-241 93 Eslöv (SE); Björk, Christer, S-230 30 Oxie (SE)
(74) Representative: Karlsson, Berne

(57) **Abstract**

The invention relates to a procedure to increase the traffic capacity in a wireless communications system, preferably DECT, which includes at least one base station (4) and at least two portable units (5, 6). This is achieved by establising a first asymmetrical communications link (1) between the base station (4) and a first portable unit (5) and by establishing a second asymmetrical communications link (2) between the base station (4) and a second portable unit (6), and by establishing a communications link (3) for direct transmission of signals between the portable units (5, 6).

## Description

### TECHNICAL FIELD

The present invention relates to a procedure to increase the traffic capacity in a wireless communications system, preferably DECT (Digital European Cordless Telecommunication) which includes base stations and portable units.

### PRIOR ART

DECT is specified to be able to serve a large number of portable units for speech. The design goal for DECT was 10 000 Erlang/km²/flat. The capacity is sufficient for speech traffic in areas with high telephone density, type office environments.

It is probable that DECT will be used both for wireless telephony and as RLAN (Radio Local Area Nework) within the same area. Environments with a high concentration of users and bandwidth demanding applications will require LANs with high capacity. DECT'S capacity will not be sufficient if it shall be used both as RLAN and for wireless telephony in all environments.

A method to increase the traffic capacity is not to transmit more power than necessary thereby obtaining the least possible frequency repeating distance.

The capacity in a DECT-system might be further increased if it was possible to transmit information between the portable units without going the detour via the base station.

It is, however, known to route traffic between portable units. For instance WO,A1 94/5 101 describes a wireless communications system which supports communication directly between the portable units. The system is based on the CT2-standard.

The American patent document US-A-5 247 567 shows a wireless telephone system consisting of portable units which can communicate with each other directly. According to the document the two portable units communicate with each other by utilizing only one channel. The base station takes part in the establishing of the direct link.

The American patent document US-A-4 935 927 relates to a device called Base Station Emulator. The device is in principle a modified subscriber terminal. A subscriber terminal (portable telephone) can either communicate with the emulator as if it were a normal subscriber terminal, or it can communicate with another subscriber terminal which is synchronized with the emulator.

Further, the American patent document US-A-4 748 655 shows "A personal portable telephone" intended to give the user access to a communications system in many different ways. Among other things can be mentioned that access can be obtained by allowing the telephone to utilize a mobile telephone as interface towards the communications system (see the abstract or column 3, line 47-56). It consequently is not a matter of a bidirectional communication directly between these units, but the mobile unit is utilized only as a repeater.

The above described documents show no direct physical communication between the portable units in a DECT-system in order to increase the traffic capacity of the system.

### SUMMARY OF THE INVENTION

The aim with the present invention accordingly is to increase the traffic capacity in a wireless communications system, preferably DECT, by making it possible to route the transmitted signals between the included units in the system in a way that an alternative communication path is obtained.

This aim is achieved by arranging a direct communication path between the portable units in the system without the need to transmit signals via one in the system included base station. The traffic capacity which is at that released in the base station can by that be utilized for other tasks at which a higher transmission capacity in the system is made possible.

Since the distance between two portable units in a cell is often shorter than or equal to the distance between the first portable unit, the base station and the second portable unit, lower output power consequently can be used implying that battery consumption can be reduced in the portable unit and that the capacity in the system is further increased since the frequency repeating distance becomes smaller.

Another advantage with the invention is the possibility to debit the two portable units for the direct communication link by means of the asymmetrical communication links with the base station.

What has been described above is also evident from the characterizing part of the independent patent claim. Further characteristics of the invention are presented in more details in the independent patent claims.

The invention will now be described in more details below with reference to the enclosed drawings.

### BRIEF DESCRIPTION OF THE DRAWINGS

Figure 1 shows communication links between the included units in a conventional DECT-system.

Figure 2 shows a frame according to the access method TDMA/TDD.

Figure 3 shows communication links between the included units in a DECT-system according to the invention.

### DETAILED DESCRIPTION OF ONE EMBODIMENT OF THE INVENTION

The present embodiment of the invention relates to a DECT-system which utilizes the access method TDMA/TDD. In the system are included a number of portable units (for instance mobile telephones) which in a cell or in a cluster wirelessly communicate with each other via a base station.
For the sake of simplicity only communication between two portable units (PP, Portable Parts) will be described in the embodiment; the base station in the described system in the embodiment consists of a radio base station (RFP, Radio Fixed Part). A number of such radio base stations RFP and a central control unit (CCFP, Central Control Fixed Part) constitute a so called fixed base station (FP, Fixed Part) which can operate as interface towards different networks (for instance PSTN, ISDN, GSM, X.25, IEEE 802 LANs).

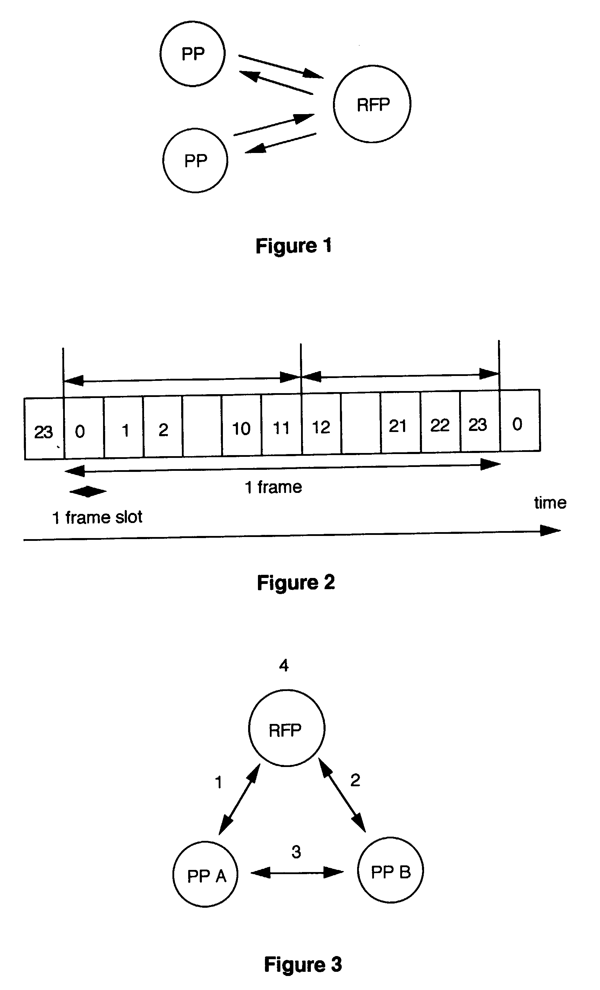

Figure 1 describes how two PP which are in the same cell can communicate with each other by means of DECT. For the communication the frequency band 1880 to 1900 MHz is utilized. The frequency band consists of ten carriers, each with a bandwidth of 1728 MHz. The gross bit rate of each carrier is 1152 kb/s, and each carrier is divided into frames of 10 ms.

Figure 2 shows the structure of the time slots in a frame which is utilized in DECT. The frame consists of 24 time slots (0-23) of which 12 time slots (0-11) are used in one direction from RFP to PP (the down link) and the remaining 12 time slots (12-23) are used in the other direction from PP to RFP (the up link), see Figure 1.

What has been described above is the conventional way of communication in DECT and is called TDD (Time Division Duplex).

DECT also allows asymmetrical links. That means that up to 23 time slots can be used at the same time in one direction (for instance the up link). At least one time slot must always be used in the opposite direction (for instance down link); it is exactly this principle with asymmetrical links which constitutes the base for the invention and which is utilized to increase the transmission capacity in the system.

The invention will now be described with reference to Figure 3. With the word "link" is in the following meant wireless communication link. With PP A respective PP B is meant the portable unit which is utilized by subscriber A respective subscriber B. The invention is made up of an RFP establishing an asymmetrical link 1 with PP A and another asymmetrical link 2 with PP B. For the two links applies that more time slots for up link compared with down link are allocated. At least one channel pair (one time slot for up link and one time slot for down link) is used for link 1 respective link 2. The time slots (1 to 20) which constitute the rest in up link in respective asymmetrical link are used for a third link 3 direct between PP A and PP B.

RFP consequently does not listen to the channels for link 3. PP A listens to the up link channels which have been allocated PP B, and PP B listens to the up link channels which have been allocated PP A. The time slots for link 3 are used for direct communication between PP A and PP B without going the detour via RFP. RFP only controls the communication between PP A and PP B via link 1 and link 2. To verify that PP A and PP B can be in direct radio contact one can suppose that one of the units initiates a so called loop-back test which includes all three communication units.

PP A, PP B and RFP selects the time slots for link 3 within the rules which exist for dynamic channel allocation in the DECT-standard. Selection of time slots can be made by means of information from PP or RFP via link 1 and link 2.

RFP can with suggested method use the time slots which PP A and PP B uses to communicate directly with each other to communication with other PP in the area. That means that an RFP according to the invention has possibility to transfer/control more information in comparison with a normal RFP.

The channel pairs in link 1 and link 2 can be used by RFP for signalling with PP A and PP B and to transfer traffic between PP A and PP B. RFP can dynamically distribute the for the direct communication between PP A and PP B allocated time slots with regard to the need for bandwidth existing in respective link PP-PP and the interference which exists in the DECT frequency band.

The direct physical communication between PP A and PP B means that channels in RFP can be used for other tasks, which results in higher traffic capacity being obtained and that fewer RFP from capacity point of view are needed within an area.

Since the distance between PP A and PP B is often smaller than, or equal to, the distance between PP A, RFP and PP B (see Figure 1 or 3) the direct communication between PP A and PP B implies that lower output power can be used (with power control), which causes that the battery consumption in PP A and PP B can be reduced, and that the capacity for DECT is increased because the frequency repeating distance becomes smaller.

The method also gives possibility to debit PP A and PP B for the direct link 3 by means of link 1 and link 2.

The invention can also be applied to radio systems with somewhat different structure than DECT, such as for instance HiperLan (High Performance Radio Local Area Network).

This above described embodiment of the invention is only to be regarded as an example and the invention is only restricted by what is indicated in the patent claims.

## Claims

1. Procedure to increase the traffic capacity in a wireless communications system comprising at least one base station (4) and at least two portable units (5, 6), **characterized** in that a first asymmetrical communication link (1) is established between the base station (4) and a first portable unit (5) and that a second asymmetrical communication link (2) is established between the base station (4) and a second portable unit (6), and that a communication link (3) is established for direct transmission of signals between the portable units (5, 6).

2. Procedure according to patent claim 1,
**characterized** in that more time slots for up link compared with down link are allocated in the asymmetrical communication links (1, 2).

3. Procedure according to patent claim 2,
**characterized** in that at least one time slot for up link and one time slot for down link are utilized in the asymmetrical communication links (1, 2) and the other time slots which constitute the rest in up link in respective asymmetrical communication link (1, 2) are utilized for transmission of signals in the communication link (3) between the portable units (5, 6).

4. Procedure according to patent claim 3,
**characterized** in that the communication system utilizes the access method TDMA/TDD.

5. Procedure according to patent claim 4,
**characterized** in that the communication system is a DECT-system.

6. Procedure according to patent claim 5,
**characterized** in that the base station (4) is a radio base station (RFP).

7. Procedure according to patent claim 1,
**characterized** in that the communications system consists of a HiperLan.
